# EUROPÄISCHE PATENTSCHRIFT

(11) **EP 1 141 568 B1**
(45) Veröffentlichungstag und Bekanntmachung des Hinweises auf die Patenterteilung: **23.04.2003**
(21) Anmeldenummer: 00901533.0
(22) Anmeldetag: 12.01.2000
(51) Int. Cl.: F16D 33/16

(54) **HYDRODYNAMISCHE KUPPLUNG**
HYDRODYNAMIC COUPLING
ACCOUPLEMENT HYDRODYNAMIQUE

(30) Priorität: 15.01.1999 DE 19901296
(43) Veröffentlichungstag der Anmeldung: 10.10.2001
(73) Patentinhaber: Voith Turbo GmbH & Co. KG, 89522 Heidenheim (DE)
(72) Erfinder: HELLINGER, Walter, D-97980 Bad Mergentheim-Rot (DE)
(74) Vertreter: Dr. Weitzel & Partner
(86) Internationale Anmeldenummer: EP0000166
(87) Internationale Veröffentlichungsnummer: WO00042331

(56) Entgegenhaltungen:
- DE-A- 19 706 652
- GB-A- 2 145 198
- US-A- 3 934 687
- US-A- 4 581 892

## Beschreibung

Die Erfindung betrifft eine hydrodynamische Kupplung mit einem Pumpenrad und einem Turbinenrad, die miteinander einen torusförmigen Arbeitsraum bilden. Der Arbeitsraum dient zur Aufnahme eines Arbeitsmediums, beispielsweise Öl oder Wasser, das ein Drehmoment überträgt.

Es gibt hydrodynamische Kupplungen, die ständig mit Arbeitsmedium gefüllt sind - sogenannte Konstantkupplungen. Es gibt aber auch hydrodynamische Kupplungen, bei denen der Arbeitsraum in steuerbarer Weise füll- und entleerbar ist - sogenannte durchflußgesteuerte und füllungsgesteuerte hydrodynamische Kupplungen. Die Erfindung befaßt sich mit der zuletzt genannten Kupplungsart. Eine solche Kupplung ist aus DE 197 06 652 A1 bekanntgeworden.

Hydrodynamische Kupplungen dienen dazu, ein Drehmoment von einem Antriebsmotor auf eine Arbeitsmaschine zu übertragen, beispielsweise von einem Elektromotor auf eine Mahlmaschine, oder auf eine Förderanlage. Aufgrund der Arbeitscharakteristik einer solchen Kupplung wird dabei das Drehmoment vom Motor auf die Arbeitsmaschine auf sehr elastische Weise übertragen. Insbesondere beim Anfahren, das heißt bei umlaufendem Motor und stillstehender Arbeitsmaschine, steigt die Kurve des auf die Arbeitsmaschine übertragenen Drehmomentes nur langsam an. Handelt es sich bei dem Antriebsmotor um einen Elektromotor, so wird dieser lastlos auf seine Nenndrehzahl hochgefahren.

Durchflußgesteuerte hydrodynamische Kupplungen werden besonders stark im Bergbau verwendet. Hier sind sie beispielsweise zwischen einen Elektromotor und ein Förderband geschaltet. Ein wichtiger Anwendungsfall sind hierbei sogenannte Ketten-Kratzförderer. Auch hierbei sorgt die Kupplung für eine schonende Drehmomentübertragung, und zwar nicht nur in der Anfahrphase, sondern auch bei laufendem Kratzförderer, nämlich dann, wenn der Kratzförderer bei seiner Arbeit auf besonders hartes Material stößt.

Inzwischen wurden die Motoren weiterentwickelt. Das Kippmoment der Motoren wurde erhöht. Die Kupplungen bisheriger Bauart können aber dieses erhöhte Kippmoment nicht erbringen, so daß nicht in genügendem Maße Drehmoment vom Motor auf die Arbeitsmaschine übertragen wird.

Der Erfindung liegt die Aufgabe zugrunde, eine Antriebseinrichtung mit einem Motor und einer durchflußgesteuerten hydrodynamischen Kupplung derart zu gestalten, daß beim Anfahrbetrieb auch dann ausreichend Drehmoment vom Motor auf die Arbeitsmaschine übertragen wird, wenn die Belastung durch die Arbeitsmaschine sehr hoch ist.

Diese Aufgabe wird durch die Merkmale von Anspruch 1 gelöst. Der Erfinder hat im einzelnen folgendes erkannt: Bei den geschilderten Verhältnissen, bei denen der Schlupf 100 Prozent beträgt, kommt es nicht zur notwendigen Befüllung des Arbeitsraumes. Vielmehr wird nur eine Teilfüllung erzielt.

Der Erfinder hat weiterhin die Gründe hierfür erkannt: Bei den bisher bekannten, durchflußgesteuerten hydrodynamischen Kupplungen wird dem Arbeitsraum der Kupplung Arbeitsmedium auf einem relativ kleinen Radius zugeführt. Solange der Arbeitsraum noch leer ist, macht das Zuführen von Arbeitsmedium zum Arbeitsraum keine Probleme. Mit ansteigendem Füllungsgrad baut sich jedoch im Arbeitsraum ein dynamischer Druck auf. Dieser wirkt dem Druck des zugeführten Mediums entgegen und behindert zunehmend das Zuströmen von weiterem Arbeitsmedium, so daß es gar nicht zu einer Vollfüllung des Arbeitsraumes kommt. Je weiter man aber den Einlaß für das Arbeitsmedium in den Arbeitsraum radial nach außen verlegt, um so größer ist der Rotationsdruck des einströmenden Arbeitsmediums. Dieser größere Rotationsdruck kann den hydrodynamischen Druck im Arbeitsraum überwinden. Hiermit läßt sich eine Vollfüllung des Arbeitsraumes erzielen, und damit eine Übertragung eines genügend großen Drehmoments vom Antriebsmotor auf die Arbeitsmaschine, beispielsweise auf den genannten Ketten-Kratzförderer.

Dabei muß der Einlaß nicht unbedingt auf dem größten Radius liegen, das heißt im Scheitelpunkt des Arbeitsraumes. Er sollte jedoch im Bereich des Scheitelpunktes des Arbeitsraumes liegen.

Mit der erfindungsgemäßen Gestaltung einer durchflußgesteuerten hydrodynamischen Kupplung läßt sich beispielsweise ein Ketten-Kratzförderer auch dann problemlos aus dem Stand anfahren, wenn extrem große Kohlemengen in dessen Einzugsbereich gefallen sind.

Die Erfindung sowie der Stand der Technik sind anhand der Zeichnung näher erläutert. Im einzelnen ist folgendes dargestellt
- Figur 1: zeigt eine durchflußgesteuerte hydrodynamische Kupplung gemäß der Erfindung in einem Axialschnitt.
- Figur 2: zeigt eine durchflußgesteuerte, hydrodynamische Kupplung gemäß dem Stande der Technik, wiederum in einem Axialschnitt.

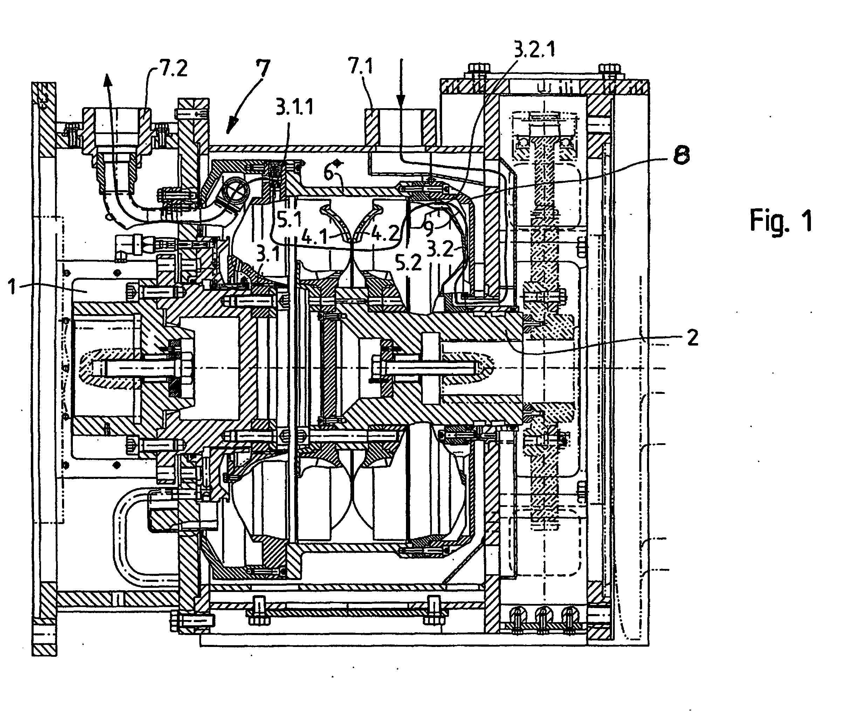

Die in Figur 1 dargestellte Kupplung ist in Duplex-Bauart ausgeführt.

Die Kupplung weist eine Antriebswelle 1 und eine Abtriebswelle 2 auf. Die Antriebswelle 1 ist mit einem ersten Pumpenrad 3.1 drehfest verbunden, ferner - über eine zylindrische Wand 6, mit einem zweiten Pumpenrad 3.2.

Das zweite Pumpenrad 3.2 ist mit der zylindrischen Wand 6 drehfest verbunden.

Die Abtriebswelle 2 trägt ein erstes Turbinenrad 4.1 und ein zweites Turbinenrad 4.2.

Die Radpaare 3.1, 4.1 und 3.2, 4.2 bilden jeweils einen Arbeitsraum 5.1, 5.2 miteinander.

Die genannten, umlaufenden Bauteile sind von einem Gehäuse 7 umgeben. Das Gehäuse weist einen Gehäuseeinlaß 7.1 und einen Gehäuseauslaß 7.2 für ein Arbeitsmedium auf. Dieses kann beispielsweise Wasser oder Öl sein.

Am Pumpenrad 3.2 ist die sogenannte Kupplungsschale 8 drehfest angeschlossen. Diese bildet zusammen mit dem Pumpenrad 3.2 einen Strömungskanal 9.

Entscheidend gemäß der Erfindung ist eine Bohrung 3.2.1. Diese stellt eine leitende Verbindung zwischen Strömungskanal 9 und Arbeitsraum 5.2 her. Die Bohrung 3.2.1 kann achsparallel oder gegen die Maschinenachse geneigt verlaufen. Sie kann ferner stromabwärts düsenartig ausgebildet sein.

Dem Pumpenrad 3.1 ist ein Auslaßventil 3.1.1 zugeordnet.

Das Arbeitsmedium wird der Kupplung von einem hier nicht dargestellten äußeren Kreislauf zugeführt. Der Kreislauf umfaßt in bekannter Weise einen Kühler, einen Regler und andere bekannte Aggregate.

Das Arbeitsmedium wird in das Gehäuse durch den Gehäuseeinlaß 7.1 eingeführt. Es strömt sodann innerhalb des Gehäuses radial nach innen bis annähernd zur Abtriebswelle 2. Von dort aus tritt es in den Ströhmungskanal 9 ein, gelangt durch die Querbohrung 3.2.1 in den Arbeitsraum 5.2, von dort in den Arbeitsraum 5.1, und von dort über Ventil 3.1.1 zum Gehäuseauslaß 7.2.

Durch die Anordnung der Querbohrung 3.2.1 in einem radial-äußeren Bereich des Arbeitsraumes 5.2 - hier im Bereich des Scheitelpunktes dieses Arbeitsraumes - ist es möglich, den Arbeitsraum 5.2 und auch den Arbeitsraum 5.1 vollständig mit Arbeitsmedium zu füllen.

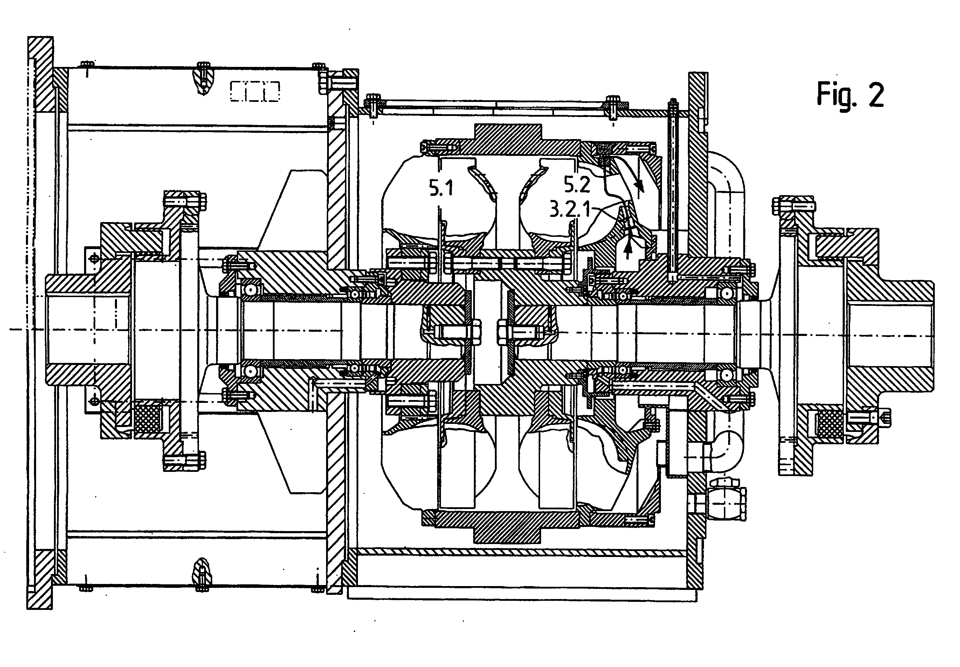

Bei der in Figur 2 dargestellten Ausführungsform einer vorbekannten hydrodynamischen Strömungskupplung handelt es sich wiederum um eine Duplex-Kupplung. Der entscheidende Unterschied gegenüber der erfindungsgemäßen Kupplung besteht darin, daß der Einlaß 3.2.1 in den Arbeitsraum 5.2 auf einem wesentlich kleineren Radius liegt. Ein vollständiges Füllen der Arbeitsräume 5.2, 5.1 bei einem Schlupf von 100 Prozent und bei großer Last ist hierbei nicht oder nur schwer möglich.

## Patentansprüche

1. Durchflußgesteuerte hydrodynamische Kupplung;
1.1 mit einem Pumpenrad (3.1, 3.2);
1.2 mit einem Turbinenrad (4.1, 4.2);
1.3 mit einer Antriebswelle (1), die mit dem Pumpenrad (3.1, 3.2), drehfest verbunden ist;
1.4 mit einer Abtriebswelle (2), die mit dem Turbinenrad (4.1, 4.2) drehfest verbunden ist;
1.5 Pumpenrad (3.1, 3.2) und Turbinenrad (4.1, 4.2) bilden miteinander einen torusförmigen Arbeitsraum (5.1, 5.2);
1.6 der Arbeitsraum (5.1, 5.2) ist an einen äußeren Kreislauf für ein Arbeitsmedium angeschlossen und weist einen Einlaß (3.2.1) zum Einleiten von Arbeitsmedium in den Arbeitsraum (5.2) auf; **gekennzeichnet durch** die folgenden Merkmale:
1.7 es ist ein Gehäuse (7) vorgesehen, daß die umlaufenden Teile der Kupplung umgibt, und daß einen Gehäuseeinlaß (7.1) und einen Gehäuseauslaß (7.2) für das Arbeitsmedium aufweist.
1.8 der Einlaß (3.2.1) befindet sich im Bereich des größten Radius des Arbeitsraumes (5.2).

2. Kupplung nach Anspruch 1, **gekennzeichnet durch** die folgenden Merkmale:
2.1 mit dem Pumpenrad (3.2) ist eine Kupplungsschale (8) drehfest verbunden, die dem Rücken des Pumpenrades (3.2) zugeordnet ist;
2.2 zwischen Kupplungsschale (8) und Pumpenrad (3.2) ist ein Strömungskanal (9) gebildet;
2.3 der Einlaß (3.2.1) stellt eine leitende Verbindung zwischen dem stromabwärtigen Ende des Strömungskanales (9) und dem Arbeitsraum (5.2) her.

3. Kupplung nach Anspruch 1 oder 2, **gekennzeichnet durch** die folgenden Merkmale:
3.1 es sind in einer Duplex-Anordnung zwei Pumpenräder (3.1, 3.2) sowie zwei Turbinenräder (4.1, 4.2) vorgesehen, so daß zwei Teilkupplungen mit jeweils einem Arbeitsraum (5.1, 5.2) gebildet sind;
3.2 die Kupplungsschale (8), der Strömungskanal (9) sowie der Einlaß (3.2.1) zum Einführen von Arbeitsmedium sind derjenigen Teilkupplung zugeordnet, die sich nahe bei der Abtriebswelle (2) befindet.

4. Kupplung nach Anspruch (3), **dadurch gekennzeichnet, daß** der Gehäuseeinlaß (7.1) im wesentlichen in jenem Axialbereich angeordnet ist, in welchem sich die nahe bei der Abtriebswelle befindliche Teilkupplung befindet.

## Claims

1. Flow-controlled hydrodynamic coupling;
1.1 with a pump wheel (3.1, 3.2);
1.2 with a turbine wheel (4.1, 4.2);
1.3 with a drive shaft (1), non-rotatably connected to the pump wheel (3.1, 3.2);
1.4 with an output shaft (2), non-rotatably connected to the turbine wheel (4.1, 4.2);
1.5 the pump wheel (3.1, 3.2) and turbine wheel (4.1, 4.2) together form a toroidal operating chamber (5.1, 5.2);
1.6 the operating chamber (5.1, 5.2) is attached to an outer circuit for an operating medium and comprises an inlet (3.2.1) for the introduction of operating medium into the operating chamber (5.2);
**characterised by** the following features:
1.7 a housing 7 is provided surrounding the peripheral parts of the coupling, and comprising a housing inlet (7.1) and a housing outlet (7.2) for the operating medium.
1.8 the inlet (3.2.1) is located in the region of the largest radius of the operating chamber (5.2).

2. Coupling according to claim 1, **characterised by** the following features:
2.1 non-rotatably connected to the pump wheel (3.2) is a coupling shell (8) associated with the back of the pump wheel (3.2);
2.2 formed between the coupling shell (8) and pump wheel (3.2) is a flow duct (9);
2.3 the inlet (3.2.1) produces a conductive connection between the downstream end of the flow duct (9) and the operating chamber (5.2).

3. Coupling according to claim 1 or 2, **characterised by** the following features:
3.1 provided in a duplex arrangement are two pump wheels (3.1, 3.2) and two turbine wheels (4.1, 4.2), so two partial couplings are formed, each with one operating chamber (5.1, 5.2);
3.2 the coupling shell (8), the flow duct (9) and the inlet (3.2.1) for introduction of operating medium are associated with the partial coupling located close to the output shaft (2).

4. Coupling according to claim 3, **characterised in that** the housing inlet (7.1) is substantially arranged in the axial region in which the partial coupling located close to the output shaft is situated.

## Revendications

1. Embrayage hydrodynamique à régulation du débit,
avec une roue de pompe (3.1, 3.2),
avec une roue de turbine (4.1, 4.2),
avec un arbre d'entraînement (1) solidaire en rotation de la roue de pompe (3.1, 3.2),
avec un arbre de sortie (2) solidaire en rotation de la roue de turbine (4.1, 4.2),
dans lequel la roue de pompe (3.1, 3.2) et la roue de turbine (4.1, 4.2) forment ensemble un espace de travail (5.1, 5.2) en forme de tore,
dans lequel l'espace de travail (5.1, 5.2) est raccordé à un circuit externe pour un fluide de travail et présente une entrée (3.2.1) pour l'admission de fluide de travail dans l'espace de travail (5.2),
**caractérisé en ce que** :
il est prévu un carter (7) qui entoure les éléments rotatifs de l'embrayage et qui présente une entrée de carter (7.1) et une sortie de carter (7.2) pour le fluide de travail ;
l'entrée (3.2.1) se trouve au niveau du plus grand rayon de l'espace de travail (5.2).

2. Embrayage selon la revendication 1, **caractérisé en ce que** :
une coquille d'embrayage (8) est solidaire en rotation de la roue de pompe (3.2) et placée à l'arrière de la roue de pompe (3.2) ;
un canal d'écoulement (9) est formé entre la coquille d'embrayage (8) et la roue de pompe (3.2) ;
l'entrée (3.2.1) crée une communication entre l'extrémité d'aval du canal d'écoulement (9) et l'espace de travail.

3. Embrayage selon la revendication 1 ou 2, **caractérisé en ce que** :
deux roues de pompe (3.1, 3.2) et deux roues de turbine (4.1, 4.2) sont prévues dans une configuration en duplex,
la coquille d'embrayage (8), le canal d'écoulement (9) et l'entrée (3.2.1) servant à l'admission de fluide de travail sont associés à la partie de l'embrayage qui se trouve près de l'arbre de sortie (2).

4. Embrayage selon la revendication 3, **caractérisé en ce que** l'entrée de carter (7.1) est disposée sensiblement dans la zone axiale dans laquelle se trouve la partie d'embrayage proche de l'arbre de sortie.
